# EUROPÄISCHE PATENTANMELDUNG

(11) **EP 3 372 729 A1**
(43) Veröffentlichungstag der Anmeldung: **12.09.2018**
(21) Anmeldenummer: 18159888.9
(22) Anmeldetag: 05.03.2018
(51) Int. Cl.: E01C 19/35, E02D 3/074, F16D 3/60, B06B 1/16, B06B 3/00

(54) **BODENVERDICHTUNGSVORRICHTUNG MIT AUSGLEICHSKUPPLUNG**

(30) Priorität: 10.03.2017 DE 102017105117
(71) Anmelder: Wacker Neuson Produktion GmbH & Co. KG, 80809 München (DE)
(72) Erfinder: RUPP, Ferdinand, 80639 München (DE); SIMON, Martin, 82024 Taufkirchen (DE)
(74) Vertreter: Müller Hoffmann & Partner

(57) **Zusammenfassung**

Eine Bodenverdichtungsvorrichtung weist eine Obermasse (1) mit einem Antrieb (2) und eine Untermasse (3) mit einem Unwuchterreger (5) auf. An der Untermasse (3) ist eine mit dieser fest verbundene Trägereinrichtung (12) vorgesehen, die eine Getriebeeinrichtung (8) mit einer Eingangswelle (14) und einer Ausgangswelle (16) trägt. Der Antrieb (2) weist eine Antriebswelle (13) auf, die mit der Eingangswelle (14) gekoppelt ist. Der Unwuchterreger (5) weist eine Erregerwelle (15) auf, die mit der Ausgangswelle (16) gekoppelt ist. Zwischen der Antriebswelle (13) des Antriebs (2) und der Eingangswelle (14) der Getriebeeinrichtung (8) oder zwischen der Ausgangswelle (16) der Getriebeeinrichtung (8) und der Erregerwelle (15) des Unwuchterregers (5) ist eine Ausgleichskupplung (17) vorgesehen. Die Ausgleichskupplung (17) ist ausgebildet, um einen Axialversatz, einen Radialversatz und einen Winkelversatz zwischen der Antriebswelle (13) und der Eingangswelle (14) auszugleichen.

## Beschreibung

Die Erfindung betrifft eine Bodenverdichtungsvorrichtung, wie zum Beispiel eine Vibrations- oder Rüttelplatte.

Vibrationsplatten zur Bodenverdichtung sind bekannt. Sie sind üblicherweise derart aufgebaut, dass sie eine einen Antriebsmotor tragende Obermasse und eine mit der Obermasse relativ zu dieser beweglich gekoppelte Untermasse aufweisen. An der Untermasse ist ein Unwuchterreger vorgesehen, der auf einer Bodenkontaktplatte angebracht ist und im Betrieb Vibrationen in diese einleitet. Die Vibrationen werden über die Bodenkontaktplatte in den zu verdichtenden Boden eingebracht.

Der Unwuchterreger kann üblicherweise eine, zwei oder drei Unwuchtwellen aufweisen, die drehend angetrieben werden. Bei einer Rotation der einen oder der mehreren Unwuchtwellen entstehen aufgrund der auf der jeweiligen Unwuchtwelle angebrachten Unwuchtmasse (es können auch mehrere Unwuchtmassen angebracht sein) die gewünschten Unwuchtkräfte, die die Vibrationen bewirken.

Für den Antrieb des Unwuchterregers haben sich vor allem zwei Systeme bewährt, nämlich ein hydrostatischer Antrieb und ein Keilriemenantrieb.

Beim hydrostatischen Antrieb wird über eine auf der Obermasse an einem Verbrennungsmotor sitzende Zahnradpumpe Hydrauliköl unter Druck gesetzt, das einen auf der Untermasse sitzenden, am Unwuchterreger befestigten Zahnradmotor antreibt. Die beiden Zahnradeinheiten sind über Hydraulikschläuche miteinander verbunden. Der Ausgleich der Relativbewegungen zwischen Obermasse und Untermasse wird durch die Flexibilität der Hydraulikschläuche ermöglicht.

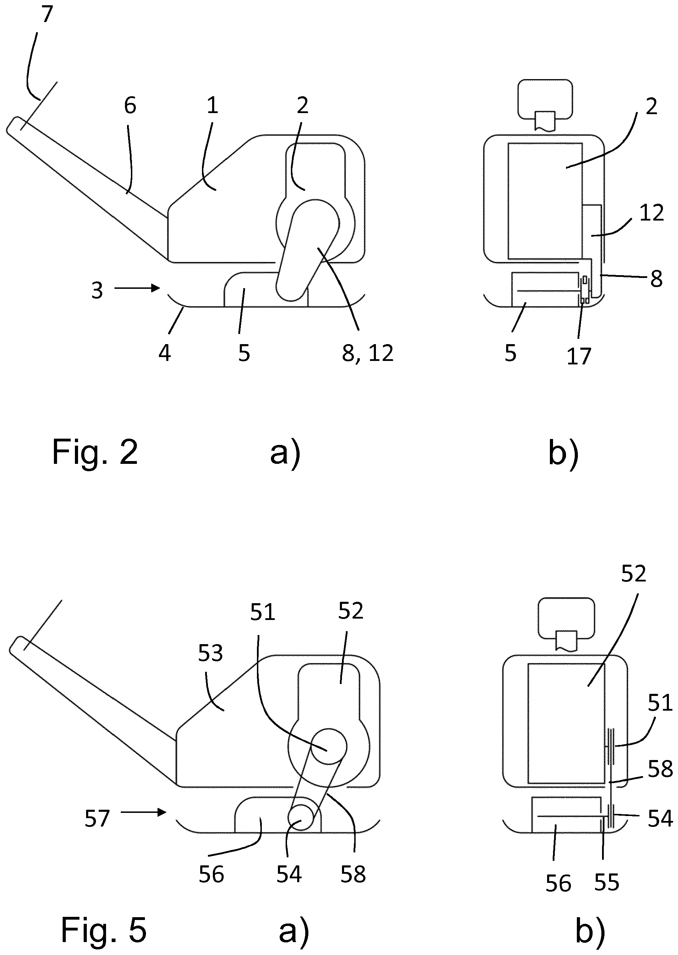

Ein Beispiel für eine aus dem Stand der Technik allgemein bekannte Vibrationsplatte mit Keilriemenantrieb ist in Fig. 5 gezeigt, wobei Fig. 5a) eine stark schematisierte Seitenansicht und Fig. 5b) eine Rückansicht darstellt.

Bei einem Keilriemenantrieb ist eine erste Keilriemenscheibe 51 an einem stets quer eingebauten Verbrennungsmotor 52 auf einer Obermasse 53 vorgesehen. Eine zweite Keilriemenscheibe 54 ist auf einer stets quer eingebauten Erregerwelle 55 an einem Unwuchterreger 56 einer Untermasse 57 befestigt. Ein über beide Riemenscheiben 51, 54 laufender Keilriemen 58 dient zur Leistungsübertragung und gleicht die sich im Betrieb ergebenden Relativbewegungen zwischen Obermasse 53 und Untermasse 57 aus.

Die benötigte Keilriemenspannung wird bei Keilriemenantrieben häufig über selbstnachspannende Riemenscheiben erreicht. Alternativ kann auch eine Spannrolle vorgesehen werden, die den Riemen spannt und manuell mittels eines Werkzeugs nachgestellt wird. Bei diesen Spannsystemen wird lediglich die durchschnittliche benötigte Riemenspannung aufgebracht. Diese Systeme sind verhältnismäßig träge und nur bedingt in der Lage, die sich im Vibrationsbetrieb ergebenden schnellen Relativbewegungen zwischen Obermasse und Untermasse und die damit verbundenen Achsabstandsänderungen der beiden Wellen zu kompensieren.

Aufgrund der permanenten Relativbewegung zwischen Obermasse und Untermasse wird der zwischen den beiden Riemenscheiben umlaufende Keilriemen einer erheblichen Belastung ausgesetzt, für die er in der Regel nicht ausgelegt ist. Die von den Herstellern von handelsüblichen Keilriemen angegebenen Lebensdauern können nur dann erreicht werden, wenn die Riemenscheiben einen definierten konstanten Achsabstand und eine hohe Parallelität zueinander aufweisen. Zudem wird eine staubfreie Umgebung, insbesondere ohne abrasive Medien vorausgesetzt.

Da diese Anforderungen beim Betrieb einer riemenbetriebenen Vibrationsplatte nicht erreicht werden können, ist die Standzeit des Keilriemens stark begrenzt. Ein Versagen des Riemens führt zu einem längeren Maschinenstillstand aufgrund der aufwendigen Arbeiten zum Austausch des Riemens. Zudem ermöglicht der sich ständig ändernde Achsabstand einen erhöhten Schlupf im Riementrieb, wodurch der Gesamtwirkungsgrad des Antriebssystems negativ beeinflusst wird.

Der hydrostatische Antrieb des Unwuchterregers hat sich demgegenüber in der Praxis sehr bewährt. Er erfordert allerdings einen erheblichen zusätzlichen Bauaufwand, was zu deutlich höherem Gewicht und höheren Kosten führt. Daher wird der hydrostatische Antrieb meist nur bei Vibrationsplatten mit großer Leistung verbaut. Bei kleineren Vibrationsplatten (Rüttelplatten) hingegen kommt der unaufwendige und preiswerte Keilriemenantrieb zum Einsatz.

Der Erfindung liegt die Aufgabe zugrunde, eine Bodenverdichtungsvorrichtung anzugeben, bei der in baulich einfacher und damit preisgünstiger Weise die Antriebsleistung von dem an der Obermasse vorhandenem Antrieb zu dem Unwuchterreger an der Untermasse übertragen werden kann.

Die Aufgabe wird gelöst durch eine Bodenverdichtungsvorrichtung mit den Merkmalen von Anspruch 1. Ausgestaltungen der Erfindung sind in den abhängigen Ansprüchen angegeben.

Es wird eine Bodenverdichtungsvorrichtung angegeben, mit einer einen Antrieb aufweisenden Obermasse, einer mit der Obermasse relativ zu dieser beweglich verbundenen und eine Bodenkontaktplatte zur Bodenverdichtung aufweisenden Untermasse, einem an der Untermasse vorgesehenen und von dem Antrieb antreibbaren Unwuchterreger und mit einer an der Obermasse oder der Untermasse angeordneten und mit dieser fest verbundenen Trägereinrichtung. Dabei trägt die Trägereinrichtung eine Getriebeeinrichtung, mit einer Eingangswelle und einer Ausgangswelle, die durch eine Drehmoment-Übertragungseinrichtung zum Übertragen eines Drehmoments von der Eingangswelle auf die Ausgangswelle gekoppelt sind. Die Trägereinrichtung lagert die Eingangswelle und die Ausgangswelle drehbar. Der Antrieb weist eine Antriebswelle auf, die mit der Eingangswelle gekoppelt ist. Der Unwuchterreger weist eine Erregerwelle auf, die mit der Ausgangswelle gekoppelt ist. Zwischen der Antriebswelle des Antriebs und der Eingangswelle der Getriebeeinrichtung oder - bei einer alternativen Ausführungsform - zwischen der Ausgangswelle der Getriebeeinrichtung und der Erregerwelle des Unwuchterregers ist eine Ausgleichskupplung vorgesehen. Die Ausgleichskupplung ist ausgebildet, um einen Axialversatz, einen Radialversatz und einen Winkelversatz zwischen der Antriebswelle und der Eingangswelle bzw. - bei der alternativen Ausführungsform - zwischen der Ausgangswelle und der Erregerwelle auszugleichen.

Bei der Bodenverdichtungsvorrichtung kann es sich zum Beispiel um eine Vibrationsplatte oder eine Rüttelplatte handeln. Dabei besteht die Obermasse im Wesentlichen durch den Antrieb, zum Beispiel einen Verbrennungsmotor oder einen Elektromotor. Zudem kann die Obermasse weitere Komponenten aufweisen, wie zum Beispiel einen Kraftstofftank, eine Batterie, Steuerungselemente, Abdeckungen sowie eine Führungsdeichsel zum Führen der Bodenverdichtungsvorrichtung.

Zu der Untermasse gehören insbesondere die Bodenkontaktplatte zum Verdichten des Bodens und der Unwuchterreger, der die gewünschten Vibrationen in die Bodenkontaktplatte einleitet.

Die Obermasse und die Untermasse sind relativ zueinander beweglich, so dass sich die Untermasse unter Einwirkung der Vibrationen möglichst frei bewegen kann, während die Obermasse so gut wie möglich von den Schwingungen entkoppelt und damit in Ruhe sein sollte. Zu diesem Zweck ist eine Schwingungsentkopplungseinrichtung zwischen der Obermasse und der Untermasse vorgesehen, zum Beispiel eine Federeinrichtung oder eine Feder-Dämpfer-Einrichtung. In der Praxis haben sich insbesondere Gummipuffer zur Verbindung zwischen Obermasse und Untermasse bewährt.

Die Ausgleichskupplung ist an der Systemgrenze zwischen Untermasse und Obermasse vorgesehen, insbesondere dort, wo die Relativbewegung zwischen einer an der Untermasse gelagerten Wellenkomponente und einer an der Obermasse gelagerten Wellenkomponente stattfindet. Da die Ausgleichskupplung in der Lage ist, einen Axialversatz, einen Radialversatz und einen Winkelversatz auszugleichen, kann sie sämtliche Relativbewegungen zwischen Obermasse und Untermasse kompensieren.

Die Antriebswelle des Antriebs ist breit zu verstehen. Es soll sich bei der Antriebswelle um den Ausgang des Antriebs handeln und kann beispielsweise einem zu dem Antrieb gehörenden Getriebe oder einer ebenfalls zu dem Antrieb gehörenden Fliehkraftkupplung nachgeschaltet werden. Somit kann die Antriebswelle als Vollwelle, aber auch als Hohlwelle oder Glocke (z.B. bei einer Fliehkraftkupplung) ausgestaltet sein.

Die oben angegebenen verschiedenen Wellen, nämlich die Antriebswelle und die Eingangswelle einerseits sowie die Ausgangswelle und die Erregerwelle andererseits können, sofern nicht die Ausgleichskupplung zwischengeschaltet sein soll, auch zueinander identisch, also insbesondere einstückig ausgeführt sein. Es ist somit nicht zwingend erforderlich, dass die beiden einander gegenüberstehenden Wellenelemente eigenständige Bauteile sind. Vielmehr können sich zum Beispiel bei einer einfacheren Bauart auch die Erregerwelle und die Ausgangswelle als eine einstückige Welle ausgebildet sein.

Die Trägereinrichtung erfüllt eine zentrale Funktion. Sie kann je nach Ausführungsform an der Obermasse oder an der Untermasse mit einer der dort vorgesehenen Komponenten steif verbunden sein. Zum Beispiel kann die Trägereinrichtung an der Untermasse mit dem Unwuchterreger und/oder der Bodenkontaktplatte fest bzw. steif oder starr verbunden sein und somit eine Einheit bilden.

Die Trägereinrichtung trägt die Eingangswelle und die Ausgangswelle und hält beide in einer relativ zueinander unveränderlichen Lage. Insbesondere gewährleistet die Trägereinrichtung, dass die Eingangswelle und die Ausgangswelle auch im Vibrationsbetrieb einen konstanten Wellenabstand aufweisen und in der vorgegebenen Winkelstellung, also z.B. zueinander parallel oder auch rechtwinklig verlaufen. Die sich bei Rüttelplatten aus dem Stand der Technik ergebende Problematik eines sich im Vibrationsbetrieb permanent ändernden Achsabstands kann damit vermieden werden. Somit ist es insbesondere gewährleistet - wie später noch erläutert wird - dass zum Beispiel zwei Riemenscheiben, die auf der Eingangswelle und der Ausgangswelle angebracht sind und zwischen denen ein Keilriemen umläuft, stets den gleichen Achsabstand bei hoher Parallelität aufweisen. Auf diese Weise kann eine lange Standzeit des Keilriemens erreicht werden.

Die Trägereinrichtung ermöglicht aufgrund ihres steifen, starren Aufbaus, dass die von ihr getragene Getriebeeinrichtung ihre bestimmungsgemäße Funktion dauerhaft erfüllen kann.

Bei der Getriebeeinrichtung und der in diesem Zusammenhang vorgesehenen Drehmoment-Übertragungseinrichtung kann es sich um einen Riementrieb oder Kettentrieb handeln. Ebenso ist es möglich, die Getriebeeinrichtung als Zahnradgetriebe bzw. Stirnradgetriebe auszuführen.

Bei einer Ausführungsform ist die Trägereinrichtung mit der Obermasse fest verbunden. Die Ausgleichskupplung ist dann zwischen der Ausgangswelle der Getriebeeinrichtung und der Erregerwelle des Unwuchterregers vorgesehen, wobei die Ausgleichskupplung ausgebildet ist, um einen Axialversatz, einen Radialversatz und einen Winkelversatz zwischen der Ausgangswelle und der Erregerwelle auszugleichen.

In diesem Fall ist somit die Trägereinrichtung an der Obermasse starr bzw. mit hoher Steifigkeit verbunden. Die Trägereinrichtung gewährleistet den konstanten Achsabstand zwischen der mit dem Antrieb gekoppelten Eingangswelle und der Ausgangswelle. Die dann zwischen der Ausgangswelle und der Erregerwelle im Betrieb herrschende Relativbewegung wird durch die Ausgleichskupplung kompensiert, so dass die Antriebsleistung von der Ausgangswelle auf die Erregerwelle übertragen werden kann.

Bei einer anderen Ausführungsform ist die Trägereinrichtung mit der Untermasse fest bzw. starr, also mit hoher Steifigkeit verbunden. In diesem Fall ist die Ausgleichskupplung zwischen der Antriebswelle des Antriebs und der Eingangswelle der Getriebeeinrichtung vorgesehen, wobei die Ausgleichskupplung dann ausgebildet ist, um einen Axialversatz, einen Radialversatz und einen Winkelversatz zwischen der Antriebswelle und der Eingangswelle auszugleichen.

Bei dieser alternativen Ausführungsform wird somit die Trägereinrichtung an der Untermasse, zum Beispiel an dem Unwuchterreger mit hoher Steifigkeit angebracht. Auch hier ist die Trägereinrichtung in der Lage, den Achsabstand zwischen der Eingangswelle und der Ausgangswelle der Getriebeeinrichtung konstant zu halten. Somit findet die Relativbewegung zwischen der vom Antrieb kommenden Antriebswelle und der Eingangswelle der Getriebeeinrichtung statt. Dort ist die Ausgleichskupplung angeordnet, um diese Relativbewegung zu kompensieren.

Die Trägereinrichtung und die Getriebeeinrichtung können wenigstens teilweise von einem Getriebegehäuse umschlossen sein. Insbesondere ist es günstig, wenn die Komponenten der Getriebeeinrichtung, insbesondere die Drehmoment-Übertragungseinrichtung weitgehend vollständig von dem Getriebegehäuse umschlossen und somit gegenüber der Umgebung abgekapselt ist. Zum Beispiel kann das Getriebegehäuse als Riementrieb-Gehäuse ausgeführt sein und den zur Drehmomentübertragung dienenden Riemen gegenüber der Umgebung abkapseln.

Das Getriebegehäuse kann Blechelemente aufweisen, die an der Trägereinrichtung befestigt sind, um das Gehäuse zu bilden. Die Trägereinrichtung kann z.B. als Gussteil oder Schweißteil ausgebildet sein.

Die Trägereinrichtung kann mit der Bodenkontaktplatte und/oder einem zu dem Unwuchterreger gehörenden Erregergehäuse steif verbunden sein.

Bei dieser Ausführungsform ist es vorteilhaft, wenn die Eingangswelle in einem Ruhezustand der Bodenverdichtungsvorrichtung mit der Antriebswelle des Antriebs fluchtet. Das bedeutet, dass die Drehachsen der Eingangs- und der Antriebswelle fluchten. Im Vibrationsbetrieb hingegen können die Drehachsen einen vielfältigen Versatz (axial, radial und winkelmäßig) einnehmen, der dann durch die Ausgleichskupplung kompensiert wird.

Die Getriebeeinrichtung kann ein Riementrieb sein, mit einer ersten Riemenscheibe und einer von der ersten Riemenscheibe über einen Riemen, zum Beispiel einen Keilriemen, antreibbaren zweiten Riemenscheibe. Die erste Riemenscheibe kann von der Eingangswelle getragen werden, während die zweite Riemenscheibe von der Ausgangswelle getragen werden kann. Die Erregerwelle des Unwuchterregers kann mit der Ausgangswelle und damit mit der zweiten Riemenscheibe derart gekoppelt sein, dass sie über die zweite Riemenscheibe drehend antreibbar ist.

Wenn die Getriebeeinrichtung somit als Riementrieb ausgebildet ist, kann der Riemen ausgewählt sein aus der Gruppe Keilriemen, Zahnriemen, Keilrippenriemen. Alternativ kann die Getriebeeinrichtung als Kettentrieb oder Zahnradgetriebe ausgebildet sein.

Die Ausgleichskupplung kann als Lenkerkupplung ausgebildet sein. Je nachdem, an welcher Stelle die Ausgleichskupplung bzw. Lenkerkupplung angeordnet ist, kann - wenn die Ausgleichskupplung bzw. Lenkerkupplung zwischen der Antriebswelle und der Eingangswelle angeordnet ist - die Lenkerkupplung eine erste Kurbel, die mit der Antriebswelle gekoppelt ist, eine zweite Kurbel, die mit der Eingangswelle gekoppelt ist und einen die erste Kurbel und die zweite Kurbel koppelnden Lenker aufweisen oder - wenn die Ausgleichskupplung zwischen Ausgangswelle und Erreger angeordnet ist - kann die Lenkerkupplung aufweisen eine erste Kurbel, die mit der Ausgangswelle gekoppelt ist, eine zweite Kurbel, die mit der Erregerwelle gekoppelt ist und einen die erste Kurbel und die zweite Kurbel koppelnden Lenker.

Die erste Kurbel und die zweite Kurbel können um einen Winkel zueinander verdreht sein, der durch den Lenker überbrückt wird. Die jeweilige Koppelstelle, an der der Lenker an der jeweiligen Kurbel angekoppelt ist, liegt dann beispielsweise jeweils an einem Ende eines Auslegers der Kurbel.

Der Lenker kann relativ zu der ersten Kurbel und/oder zu der zweiten Kurbel um wenigstens einen kleinen Winkel verschwenkbar sein. Insbesondere kann der Lenker relativ zu der jeweiligen Ebene verschwenkbar sein, in der die jeweilige Kurbel liegt und im Betrieb rotiert.

Der Lenker kann an der ersten Kurbel und/oder an der zweiten Kurbel über ein elastisches Lager angekoppelt sein. Mit Hilfe des elastischen Lagers ist es möglich, dass der Lenker relativ zu der ersten Kurbel und zu der zweiten Kurbel die erforderliche Relativbeweglichkeit aufweist.

Bei dem elastischen Lager kann es sich um ein Elastomer-Sphärolager handeln. Das Sphärolager kann aus einer inneren Metallhülse bestehen, die eine sphärische Oberfläche aufweist, sowie einer äußeren Metallhülse, die eine sphärische Bohrung aufweist. Die beiden Metallhülsen sind an der Kurbel bzw. am Lenker derart befestigt, dass dazwischen, also im jeweiligen Sitz, keine Relativbewegung auftritt. Zwischen den beiden Metallhülsen wiederum befindet sich ein Elastomer, wie zum Beispiel Gummi, das die nötige Elastizität aufweist. Das Elastomer-Sphärolager lässt sich somit sowohl tordieren als auch kardanisch auslenken.

Die erste Kurbel und/oder die zweite Kurbel weisen eine in Bezug auf ihre Drehachse gegenüber von einer Koppelstelle, an der der Lenker angekoppelt ist, angeordnete Ausgleichsmasse auf. Die Ausgleichsmasse dient zum Ausgleichen einer Unwucht, die durch die Ankopplung des Lenkers am Ausleger der jeweiligen Kurbel entsteht. Ohne Probleme lässt sich somit jede Kurbel für sich zusammen mit dem daran angekoppelten Lenker auswuchten.

Bei einer Ausführungsform ist eine Fliehkraftkupplung als Teil des Antriebs vorgesehen, wobei dann die Antriebswelle Teil der Fliehkraftkupplung ist. Die Antriebswelle kann hier zum Beispiel als Glocke bzw. Teil der Glocke der Fliehkraftkupplung ausgebildet sein. Somit ist es möglich, dass die erste Kurbel direkt mit der Antriebswelle der Fliehkraftkupplung verbunden ist.

Erfindungsgemäß wird eine gegebenenfalls durch ein Gehäuse kapselbare Trägereinrichtung angegeben, die einen definierten Achsabstand zwischen der Eingangswelle und der Ausgangswelle gewährleistet, wobei die beiden Achsen mit hoher Parallelität zueinander gehalten werden können. Mit Hilfe des Träger- bzw. Getriebegehäuses ist eine saubere Umgebung frei von Staub und Fremdkörpern gewährleistet. Somit kann insbesondere dann, wenn die Getriebeeinrichtung als Riementrieb ausgestaltet ist, erreicht werden, dass die Haltbarkeit des dann zur Anwendung kommenden Riemens die angenommene Maschinenlebensdauer übersteigt, wodurch eine Dauerhaltbarkeit erreicht werden kann.

Die im Betrieb auftretenden Relativbewegungen zwischen Obermasse und Untermasse äußern sich dadurch, dass an dem freien Ende der Trägereinrichtung bzw. des durch die Trägereinrichtung erreichten starren Getriebe- bzw. Riementriebgehäuses Relativbewegungen auftreten, die durch die Ausgleichskupplung kompensiert werden. Wenn die Ausgleichskupplung in Form der Lenkerkupplung ausgestaltet ist, kann diese die Versätze kompensieren und die Leistung übertragen.

Diese und weitere Vorteile und Merkmale der Erfindung werden nachfolgend anhand von Beispielen unter Zuhilfenahme der begleitenden Figuren näher erläutert. Es zeigen:
- Fig. 1a): eine stark schematisierte Seitenansicht einer erfindungsgemäßen Bodenverdichtungsvorrichtung;
- Fig. 1b): eine Rückansicht der Bodenverdichtungsvorrichtung von Fig. 1a);
- Fig. 1c): eine Detailvergrößerung von Fig. 1b);
- Fig. 2a): eine schematisierte Seitenansicht einer anderen Ausführungsform der Bodenverdichtungsvorrichtung;
- Fig. 2b): eine Rückansicht der Bodenverdichtungsvorrichtung von Fig. 2a);
- Fig. 3a) bis d): verschiedene Ansichten einer erfindungsgemäßen Ausgleichskupplung als Lenkerkupplung;
- Fig. 4a): eine Seitenansicht eines Elastomer-Sphärolagers;
- Fig. 4b): eine Schnittdarstellung des Elastomer-Sphärolagers;
- Fig. 5a): eine schematische Seiten einer Bodenverdichtungsvorrichtung gemäß dem Stand der Technik; und
- Fig. 5b): eine Rückansicht der Bodenverdichtungsvorrichtung von Fig. 5a).

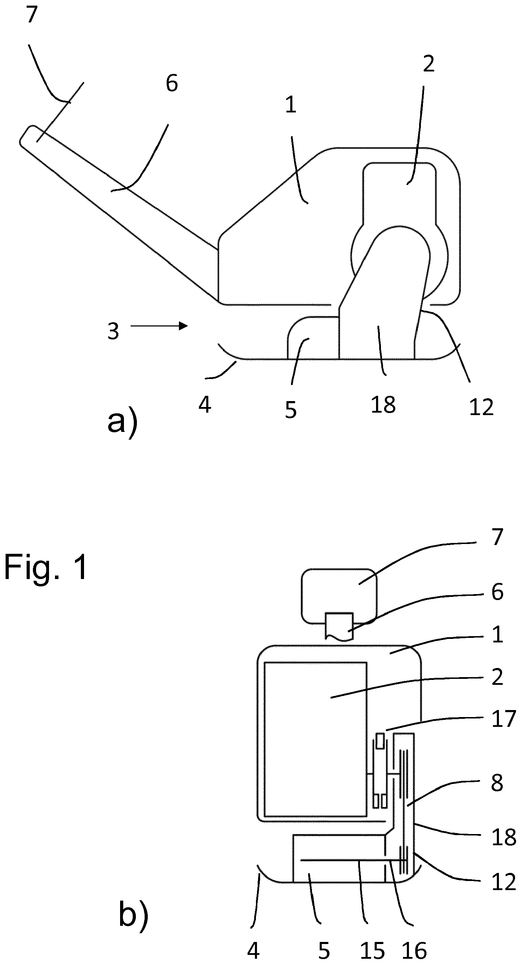

Fig. 1a) (Seitenansicht) und Fig. 1b) (Rückansicht) zeigen eine erfindungsgemäße Bodenverdichtungsvorrichtung mit einer Obermasse 1, die einen Antrieb 2, zum Beispiel einen Verbrennungsmotor oder einen Elektromotor trägt. Unterhalb von der Obermasse 1 ist eine Untermasse 3 vorgesehen, die über eine nicht dargestellte Schwingungsentkopplungseinrichtung mit der Obermasse 1 gekoppelt und relativ zu dieser beweglich ist. Die Untermasse 3 weist eine Bodenkontaktplatte 4 und einen im Betrieb die Bodenkontaktplatte 4 mit einer Schwingung bzw. Vibration beaufschlagenden Unwuchterreger 5 auf.

Der Unwuchterreger 5 kann in bekannter Weise aufgebaut sein. Insbesondere kann der Unwuchterreger 5 z.B. eine oder zwei in den Figuren nicht dargestellte Unwuchtwellen aufweisen, die vom Antrieb in Rotationsbewegung versetzt werden können, um die gewünschten Schwingungen für die Bodenverdichtung zu bewirken.

An der Obermasse 1 ist eine Führungsdeichsel 6 mit einem Steuerhebel 7 angebracht.

Ein derartiger Aufbau einer Vibrationsplatte ist aus dem Stand der Technik bekannt.

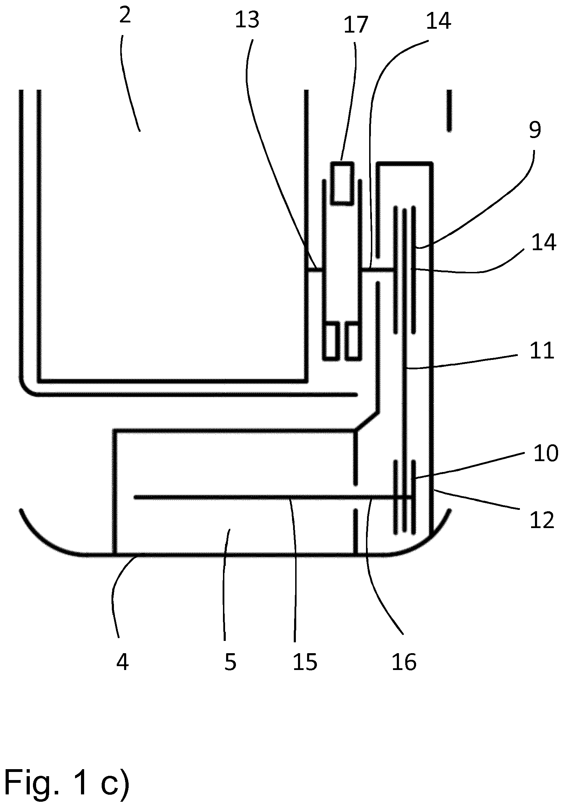

Zum Übertragen der Antriebsleistung vom Antrieb 2 zum Unwuchterreger 5 ist ein als Getriebeeinrichtung dienender Riementrieb 8 vorgesehen. Der Riementrieb 8 weist verschiedene, an sich bekannte Komponenten auf, die in der vergrößerten Darstellung von Fig. 1c) dargestellt sind. Dies ist insbesondere eine im oberen Bereich angeordnete erste Riemenscheibe 9, eine im unteren Bereich gelagerte zweite Riemenscheibe 10 sowie einen zwischen der ersten Riemenscheibe 9 und der zweiten Riemenscheibe 10 umlaufenden Keilriemen 11.

Der Riementrieb 8 ist von einer Trägereinrichtung 12 gehalten, die starr an dem Unwuchterreger 5 bzw. einem Erregergehäuse des Unwuchterregers 5 befestigt ist. Alternativ kann die Trägereinrichtung 12 auch direkt auf der Bodenkontaktplatte 4 angebracht werden.

Die Trägereinrichtung 12 ist insbesondere eine möglichst steif bzw. starr ausgeführte Konstruktion, z.B. als Guss- oder Schweißteil, um die von der Trägereinrichtung 12 verlangten Lagerungsfunktionen zu ermöglichen.

Am Ausgang des Antriebs 2 ist eine Antriebswelle 13 vorgesehen, die mit einer Eingangswelle 14 des Riementriebs 8 fluchtet. Auf der Eingangswelle 14 ist die erste Riemenscheibe 9 des Riementriebs 8 gelagert. Im unteren Bereich weist der Unwuchterreger 5 eine Erregerwelle 15 auf, die mit einer Ausgangswelle 16 des Riementriebs 8 fluchtet und mit dieser gekoppelt ist. Die Erregerwelle 15 und die Ausgangswelle 16 können auch einstückig als eine Welle ausgebildet sein.

Auf der Ausgangswelle 16 ist die zweite Riemenscheibe 10 des Riementriebs 8 gelagert.

Da sowohl die Eingangswelle 14 als auch die Ausgangswelle 16 zusammen mit der ersten Riemenscheibe 9 und der zweiten Riemenscheibe 10 in der Trägereinrichtung 12 gelagert sind, wird ihr Achsabstand durch die Trägereinrichtung 12 konstant gehalten. Zudem wird die Parallelität der Eingangswelle 14 und der Ausgangswelle 16 auch im Betrieb beibehalten.

Der Riementrieb 8 kann zusammen mit der Trägereinrichtung 12 ein Riementrieb-gehäuse bilden und so den im Inneren verlaufenden Riementrieb gegenüber der Umgebung abdichten. Es sind dann lediglich zwei Bohrungen vorzusehen, durch die sich einerseits die Eingangswelle 14 und andererseits die Ausgangswelle 16 erstrecken kann. Da somit eine vollständige Abdichtung des Riementriebgehäuses in der Trägereinrichtung 12 erreicht werden kann, kann kein Staub eindringen. Auch kann durch ein entsprechendes Befestigen der Trägereinrichtung 12 an dem Erregergehäuse des Unwuchterregers 5 ein Eindringen von Staub verringert werden.

Zwischen der Antriebswelle 13 und der Eingangswelle 14 ist eine Ausgleichskupplung 17 vorgesehen, die zum Ausgleich eines Axialversatzes, eines Radialversatzes und eines Winkelversatzes zwischen der Antriebswelle 13 und der Eingangswelle 14 dient und die später noch erläutert wird.

Zum Abdichten des Gehäuses des Riementriebs 8 kann ein seitlicher Deckel 18 auf der Trägereinrichtung 12 befestigt sein. Der Deckel 18 kann mit einer Dichtung montiert sein.

Die im Betrieb auftretenden Relativbewegungen von Obermasse 1 und Untermasse 3 äußern sich dadurch, dass sich das obere Ende der Trägereinrichtung 12 mit dem Gehäuse des Riementriebs 8 und damit die Eingangswelle 14 bezüglich der Motorkurbelwelle bzw. der Antriebswelle 13 nähert bzw. entfernt (Axialversatz), radial in alle Richtungen verschiebt (Radialversatz) und Winkelversätze zwischen beiden Wellen auftreten (Winkelversatz). Die Ausgleichskupplung 17 gleicht diese Versätze aus und überträgt die Antriebsleistung.

Fig. 2 zeigt eine andere Ausführungsform der Vibrationsplatte. Der wesentliche Aufbau von Obermasse 1 und Untermasse 3 ist dabei identisch zu der Ausführungsform von Fig. 1.

Im Unterschied zu der Variante von Fig. 1 allerdings ist bei der Ausführungsform von Fig. 2 die Trägereinrichtung 12 fest bzw. starr an der Obermasse 1 befestigt. Zum Beispiel kann die Trägereinrichtung 12 an dem Motorgehäuse des Antriebs 2 angebracht werden. Ebenso ist es möglich, die Trägereinrichtung 12 an einer an der Obermasse 1 vorhandenen, aber in Fig. 2 nicht dargestellten Tragstruktur anzubringen. Jedenfalls bewegt sich somit die Trägereinrichtung 12 zusammen mit der Obermasse 1, so dass am unteren Ende der Trägereinrichtung 12 an der Ausgangswelle 16 die entsprechende Relativbewegung zwischen Obermasse 1 und Untermasse 3 anliegt. Dementsprechend ist zwischen der Ausgangswelle 16 und der Erregerwelle 15 die Ausgleichskupplung 17 angeordnet.

Bei Bedarf kann die Ausgleichskupplung 17 gegen das Eindringen von Steinen durch einen Balg geschützt werden.

Bei der Variante von Fig. 2 sind weniger bewegliche Komponenten auf der stark vibrationsbelasteten Untermasse 3 angeordnet, was der Haltbarkeit dieser Komponenten zugutekommen kann. Darüber hinaus ist die Untermasse 3 leichter, was für die Verdichtungsleistung sowie für die Fahrdynamik förderlich sein kann.

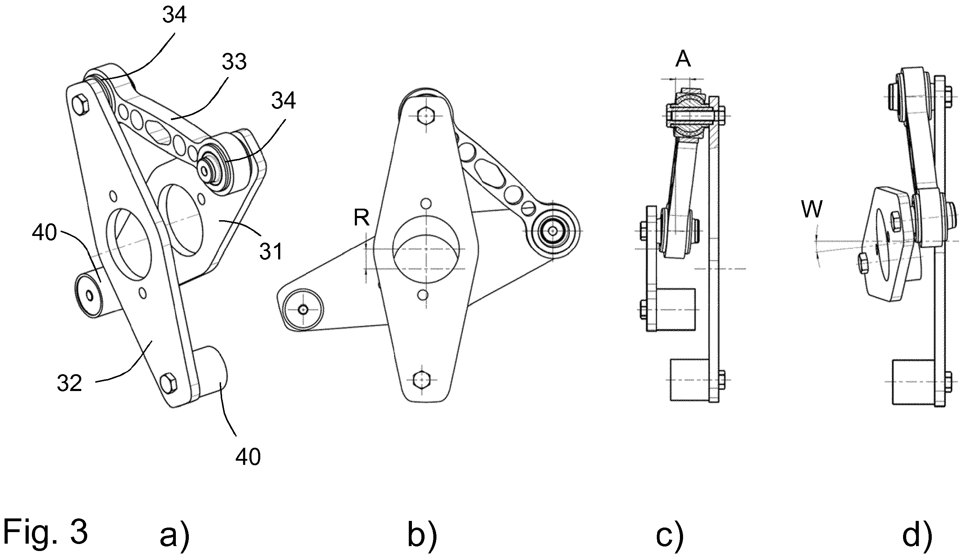

Der Aufbau der Ausgleichskupplung 17 ist aus Fig. 3 ersichtlich, wobei Fig. 3a) die Ausgleichskupplung in Perspektivdarstellung zeigt. Fig. 3b) dient zum Verdeutlichen des Radialversatzes R, Fig. 3c) zum Darstellen eines Axialversatzes A und Fig. 3d) zur Verdeutlichung eines Winkelversatzes W.

Die Ausgleichskupplung 17 weist eine erste Kurbel 31 und eine zweite Kurbel 32 auf. Die erste Kurbel 31 ist über einen Lenker 33 mit der zweiten Kurbel 32 gekoppelt. Der Lenker 33 ist relativ zu jeder der beiden Kurbeln 31, 32 um eine zu den Wellenachsen parallele Achse verschwenkbar (vgl. insbesondere Fig. 3b). Darüber hinaus ist der Lenker 33 auch um eine Achse verschwenkbar, die winklig, z.B. senkrecht, zu den Wellenachsen steht, um die gewünschten Ausgleichsbewegungen vollziehen zu können (vgl. Fig. 3c, d).

Zu diesem Zweck ist der Lenker 33 jeweils durch ein Sphärolager 34, insbesondere ein Elastomer-Sphärolager an einem jeweiligen Ausleger der Kurbel 31, 32 angebracht.

Die als Lenkerkupplung ausgebildete Ausgleichskupplung 17 kann sowohl auf Zug als auch auf Druck arbeiten. D.h., die erste Kurbel 31 kann den Lenker 33 in Drehrichtung vor sich herschieben, so dass die zweite Kurbel 32 angeschoben wird. Alternativ kann die erste Kurbel 31 auch in Drehrichtung drehen und den Lenker 33 ziehen, so dass die zweite Kurbel 32 durch den Lenker 33 mit gezogen wird und der Bewegung folgt.

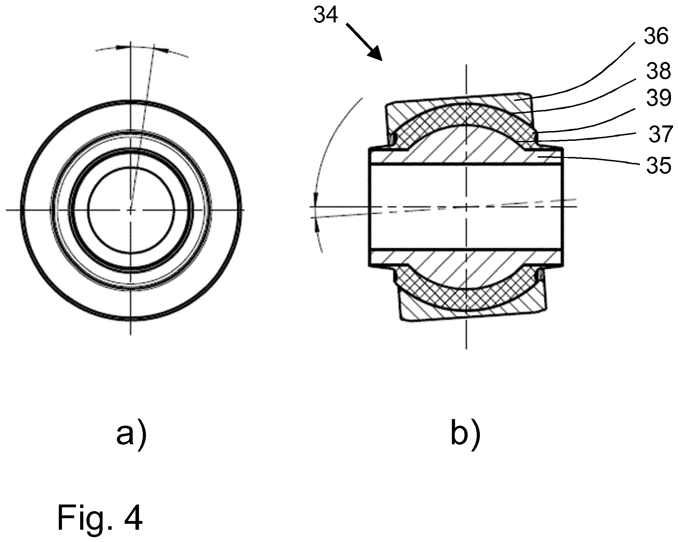

Das als Elastomer-Sphärolager ausgebildete Sphärolager 34 ist in Fig. 4 im Detail dargestellt, wobei Fig. 4a) eine Vorderansicht und Fig. 4b) einen Vertikalschnitt zeigt.

Dementsprechend besteht das Elastomer-Sphärolager 34 aus einer inneren Metallhülse 35 und einer äußeren Metallhülse 36. Die innere Metallhülse 35 weist eine sphärische Oberfläche 37 auf, während die äußere Metallhülse 36 eine sphärische Bohrung 38 aufweist. Zwischen der sphärischen Oberfläche 37 und der sphärischen Bohrung 38 ist ein Elastomer 39 eingesetzt, zum Beispiel Gummi.

Die beiden Metallhülsen 35, 36 sind an der jeweiligen Kurbel 31, 32 und an dem Lenker 33 derart befestigt, dass zwischen Kurbel bzw. Lenker einerseits und der zugeordneten Metallhülse 35, 36 keine Relativbewegung auftritt (vgl. z.B. Fig. 3c). Die Relativbewegung hingegen erfolgt ausschließlich zwischen den beiden Metallhülsen 35, 36 und wird von dem Elastomer 39 aufgenommen. Das Sphärolager 34 lässt sich somit sowohl tordieren (Fig. 4a)) als auch kardanisch auslenken (Fig. 4b)).

Damit die Lenkerkupplung (Ausgleichskupplung 17) selbst keine starke Unwucht erzeugt, die wiederum negative Auswirkungen auf die jeweils betroffenen, nicht dargestellten Wälzlagerungen, haben könnten, ist an den jeweiligen Kurbeln 31, 32 eine Ausgleichsmasse 40 an den den Ankoppelstellen des Lenkers 33 gegenüberliegenden Auslegern vorgesehen. Jede der Ausgleichsmassen 40 ragt in die Kupplungsmitte, so dass jede Kupplungshälfte, bestehend aus einer der Kurbeln 31, 32, Sphärolager 34, Ausgleichsmasse 40, jeweilige Befestigungselemente und der Hälfte des Lenkers 33 in sich stets sowohl statisch als auch dynamisch ausgewuchtet ist, solange die Lenkerkupplung nicht ausgelenkt wird. Bei einer Auslenkung der Lenkerkupplung ergeben sich abhängig vom Auslenkungsweg geringere, subjektiv nicht wahrnehmbare Unwuchtkräfte sowie entsprechende Rückstellkräfte.

Die erste Kurbel 31 ist bei dem in Fig. 1 gezeigten Beispiel auf der Antriebswelle 13 befestigt bzw. mit dieser gekoppelt. Da es durchaus üblich ist, dass dem Antrieb 2 nachgeschaltet eine Fliehkraftkupplung vorgesehen ist, so dass im Leerlauf des Antriebs 2 keine Drehmomentübertragung zum Unwuchterreger 5 erfolgt und erst bei Überschreiten einer bestimmten Drehzahl (Schaltdrehzahl) die Fliehkraftkupplung schließt und die Drehmomentübertragung erfolgt, kann die Antriebswelle 13 auch durch eine Glocke der Fliehkraftkupplung gebildet werden. In diesem Fall kann die erste Kurbel 31 direkt auf der in den Figuren nicht gezeigten Glocke der ebenfalls nicht dargestellten Fliehkraftkupplung angebracht werden.

Die zweite Kurbel 32 ist mit der Eingangswelle 14 gekoppelt bzw. auf dieser angebracht.

Indem die erste Kurbel 31 durch den Antrieb 2 in eine Drehbewegung versetzt wird, wird diese Drehbewegung über den Lenker 33 auf die zweite Kurbel 32 übertragen.

Sofern aufgrund des Rüttelbetriebs zwischen der Obermasse 1 und der Untermasse 3 die gewünschte Relativbewegung eintritt, kann diese Bewegung in der Ausgleichskupplung 17 kompensiert werden. Weisen zum Beispiel die beiden Wellen, nämlich die Antriebswelle 13 und die Eingangswelle 14 einen Versatz auf, so weisen auch die beiden Achsen der Kurbeln 31, 32 einen Versatz auf. Wenn zum Beispiel die Achsen der Kurbeln 31, 32 einen Radialversatz aufweisen, wird das Sphärolager 34 innerhalb einer Umdrehung wechselweise in je eine Richtung tordiert. Bei einem axialen Versatz der beiden Kurbeln 31, 32 werden die Sphärolager 34 kardanisch ausgelenkt. Bei einem Winkelversatz werden die Sphärolager 34 innerhalb einer Umdrehung wechselweise kardanisch ausgelenkt.

Die maximal im Betrieb auftretenden Bewegungen zwischen Obermasse 1 und Untermasse 3 sind bei der Auslegung einer entsprechenden Vibrationsplatte beim Hersteller bekannt. Daraus können die maximalen Auslenkungen der (Elastomer-)Sphärolager 34 und deren Häufigkeit ermittelt und die Sphärolager so dauerhaltbar ausgelegt werden. Um die Sphärolager im Missbrauchsfall gegen Überlast zu schützen, kann der Versatz zwischen Obermasse 1 und Untermasse 3 auch durch Anschläge begrenzt werden.

Bei der Ausführungsform von Fig. 2 ist die Ausgleichskupplung 17 im unteren Bereich zwischen der Ausgangswelle 16 und der Erregerwelle 15 angeordnet. In diesem Fall kann die erste Kurbel 31 an der Ausgangswelle 16 und die zweite Kurbel 32 an der Erregerwelle 15 angebracht werden.

Die Lenkerkupplung ist gegen Verschmutzung, insbesondere gegen abrasiven Staub unempfindlich, da weder eine Gleit- noch eine Rollreibung zwischen zwei Körpern stattfindet. Die Reibung findet lediglich intern, innerhalb des Elastomers 39 statt. Lediglich größere Fremdkörper müssen von der Lenkerkupplung ferngehalten werden, da sie bei hoher Drehzahl weggeschleudert werden und somit eine Gefahr darstellen könnten.

Die Lenkerkupplung bietet im Gegensatz zu anderen bekannten Ausgleichskupplungen bei kurzer Baulänge ein hohes übertragbares Drehmoment in Kombination mit vergleichsweise hohen zulässigen Versätzen, insbesondere einem hohen Radialversatz. Alle Versätze können stufenlos in alle Richtungen gesteigert werden; fluchtende Achsen sind ebenfalls zulässig. Darüber hinaus ist eine Staubunempfindlichkeit gegeben, was für den Einsatzzweck von Vibrationsplatten vorteilhaft ist.

## Patentansprüche

1. Bodenverdichtungsvorrichtung, mit
- einer einen Antrieb (2) aufweisenden Obermasse (1);
- einer mit der Obermasse (1) relativ zu dieser beweglich verbundenen und eine Bodenkontaktplatte (4) zur Bodenverdichtung aufweisenden Untermasse (3);
- einem an der Untermasse (5) vorgesehenen und von dem Antrieb (2) antreibbaren Unwuchterreger (3);
- einer an der Obermasse (1) oder der Untermasse (3) angeordneten und mit dieser fest verbundenen Trägereinrichtung (12);
wobei
- die Trägereinrichtung (12) eine Getriebeeinrichtung (8) trägt, mit einer Eingangswelle (14) und einer Ausgangswelle (16), die durch eine Drehmoment-Übertragungseinrichtung (11) zum Übertragen eines Drehmoments von der Eingangswelle (14) auf die Ausgangswelle (16) gekoppelt sind;
- die Trägereinrichtung (12) die Eingangswelle (14) und die Ausgangswelle drehbar (16) lagert,
- der Antrieb (2) eine Antriebswelle (13) aufweist, die mit der Eingangswelle gekoppelt (14) ist;
- der Unwuchterreger (5) eine Erregerwelle (15) aufweist, die mit der Ausgangswelle (16) gekoppelt ist;
- zwischen der Antriebswelle (13) des Antriebs (2) und der Eingangswelle (14) der Getriebeeinrichtung (8) oder zwischen der Ausgangswelle (16) der Getriebeeinrichtung (8) und der Erregerwelle (15) des Unwuchterregers (5) eine Ausgleichskupplung (17) vorgesehen ist; und wobei
- die Ausgleichskupplung (17) ausgebildet ist, um einen Axialversatz, einen Radialversatz und einen Winkelversatz zwischen der Antriebswelle (13) und der Eingangswelle (14) oder zwischen der Ausgangswelle (16) und der Erregerwelle (15) auszugleichen.

2. Bodenverdichtungsvorrichtung nach Anspruch 1, wobei
- die Trägereinrichtung (12) mit der Obermasse (1) fest verbunden ist;
- die Ausgleichskupplung (17) zwischen der Ausgangswelle (16) der Getriebeeinrichtung (8) und der Erregerwelle (15) des Unwuchterregers (5) vorgesehen ist; und wobei
- die Ausgleichskupplung (17) ausgebildet ist, um einen Axialversatz, einen Radialversatz und einen Winkelversatz zwischen der Ausgangswelle (16) und der Erregerwelle (15) auszugleichen.

3. Bodenverdichtungsvorrichtung nach Anspruch 1, wobei
- die Trägereinrichtung (12) mit der Untermasse (3) fest verbunden ist;
- die Ausgleichskupplung (17) zwischen der Antriebswelle (13) des Antriebs (2) und der Eingangswelle (14) der Getriebeeinrichtung (8) vorgesehen ist; und wobei
- die Ausgleichskupplung (17) ausgebildet ist, um einen Axialversatz, einen Radialversatz und einen Winkelversatz zwischen der Antriebswelle (13) und der Eingangswelle (14) auszugleichen.

4. Bodenverdichtungsvorrichtung nach Anspruch 3, wobei die Trägereinrichtung (12) mit der Bodenkontaktplatte (4) und/oder einem zu dem Unwuchterreger (5) gehörenden Erregergehäuse steif verbunden ist.

5. Bodenverdichtungsvorrichtung nach einem der vorstehenden Ansprüche, wobei die Trägereinrichtung (12) und die Getriebeeinrichtung (8) wenigstens teilweise von einem Getriebegehäuse umschlossen ist.

6. Bodenverdichtungsvorrichtung nach einem der vorstehenden Ansprüche, wobei die Eingangswelle (14) in einem Ruhezustand der Bodenverdichtungsvorrichtung mit der Antriebswelle (13) des Antriebs (2) fluchtet.

7. Bodenverdichtungsvorrichtung nach einem der vorstehenden Ansprüche, wobei
- die Getriebeeinrichtung (8) ein Riementrieb ist, mit einer ersten Riemenscheibe (9) und einer von der ersten Riemenscheibe (9) über einen Riemen (11) antreibbaren zweiten Riemenscheibe (10);
- die erste Riemenscheibe (9) von der Eingangswelle (14) getragen wird;
- die zweite Riemenscheibe (10) von der Ausgangswelle (16) getragen wird; und wobei
- die Erregerwelle (15) des Unwuchterregers (5) mit der Ausgangswelle (16) und damit mit der zweiten Riemenscheibe (10) derart gekoppelt ist, dass sie über die zweite Riemenscheibe (10) drehend antreibbar ist.

8. Bodenverdichtungsvorrichtung nach einem der vorstehenden Ansprüche, wobei
- die Ausgleichskupplung (17) eine Lenkerkupplung ist, welche aufweist:
+ eine erste Kurbel (31), die mit der Antriebswelle (13) gekoppelt ist;
+ eine zweite Kurbel (32), die mit der Eingangswelle (14) gekoppelt ist;
+ einen die erste Kurbel (31) und die zweite Kurbel (32) koppelnden Lenker (33);
oder wobei
- die Ausgleichskupplung (17) eine Lenkerkupplung ist, welche aufweist:
+ eine erste Kurbel (31), die mit der Ausgangswelle (16) gekoppelt ist;
+ eine zweite Kurbel (32), die mit der Erregerwelle (15) gekoppelt ist.
+ einen die erste Kurbel (31) und die zweite Kurbel (32) koppelnden Lenker (33).

9. Bodenverdichtungsvorrichtung nach einem der vorstehenden Ansprüche, wobei die erste Kurbel (31) und die zweite Kurbel (32) um einen Winkel zueinander verdreht sind, der durch den Lenker (33) überbrückt wird.

10. Bodenverdichtungsvorrichtung nach einem der vorstehenden Ansprüche, wobei der Lenker (33) relativ zu der ersten Kurbel (31) und/oder zu der zweiten Kurbel (32) um wenigstens einen kleinen Winkel verschwenkbar ist.

11. Bodenverdichtungsvorrichtung nach einem der vorstehenden Ansprüche, wobei der Lenker (33) an der ersten Kurbel (31) und/oder an der zweiten Kurbel (32) über ein elastisches Lager (34) angekoppelt ist.

12. Bodenverdichtungsvorrichtung nach einem der vorstehenden Ansprüche, wobei das elastische Lager (34) ein Elastomer-Sphärolager ist.

13. Bodenverdichtungsvorrichtung nach einem der vorstehenden Ansprüche, wobei die erste Kurbel (31) und/oder die zweite Kurbel (32) eine in Bezug auf ihre Drehachse gegenüber von einer Koppelstelle, an der der Lenker (33) angekoppelt ist, angeordnete Ausgleichsmasse (40) aufweist.

14. Bodenverdichtungsvorrichtung nach einem der vorstehenden Ansprüche, wobei
- eine Fliehkraftkupplung als Teil des Antriebs (2) vorgesehen ist; und wobei
- die Antriebswelle (13) Teil der Fliehkraftkupplung ist;
